# EUROPÄISCHE PATENTSCHRIFT

(11) **EP 1 816 711 B1**
(45) Veröffentlichungstag und Bekanntmachung des Hinweises auf die Patenterteilung: **21.09.2016**
(21) Anmeldenummer: 07000657.2
(22) Anmeldetag: 13.01.2007
(51) Int. Cl.: H01R 43/18, H01R 13/422, B29C 45/26, B29C 33/44

(54) **Verfahren zur Herstellung einer Verrastungsvorrichtung für einen elektrischen Kontakt in einem Steckverbinder**
Method for producing a locking device for an electric contact in a connector
Procédé destiné à la fabrication d'un dispositif d'enclenchement pour un contact électrique dans un connecteur à fiches

(30) Priorität: 02.02.2006 DE 102006004782
(43) Veröffentlichungstag der Anmeldung: 08.08.2007
(73) Patentinhaber: Harting Electric GmbH & Co. KG, 32339 Espelkamp (DE)
(72) Erfinder: Ferderer, Albert, 32339 Espelkamp (DE)

(56) Entgegenhaltungen:
- EP-A- 1 291 980
- EP-A- 1 577 981
- EP-A2- 0 645 846
- DE-A1- 1 515 831
- DE-A1- 19 858 091
- US-A- 4 358 179
- US-A- 4 378 103
- US-A- 5 709 831
- US-A1- 2005 095 911

## Beschreibung

Die Erfindung betrifft ein Verfahren zur Herstellung einer Verrastungsvorrichtung für einen elektrischen Kontakt in einer Durchgangsöffnung und einem sich daran anschließenden Einfügeraum in einem Isolierkörper, mittels eines Spritzwerkzeuges für einen Steckverbinder sowie eine Verrastungsvorrichtung für einen elektrischen Kontakt in einer Durchgangsöffnung und einem daran anschließenden Einfügeraum in einem Isolierkörper.

Eine derartige Verrastungsvorrichtung wird benötigt, um einen elektrischen Kontakt innerhalb einer Öffnung in einem Isolierkörper unverlierbar zu halten.

### Stand der Technik

Es ist durchaus bekannt, die hier bekannten elektrischen Kontakte, die meist als Crimpkontakte ausgeführt und innerhalb eines Isolierkörpers angeordnet sind, mittels entsprechender Verrastungsmittel (z. B. Sperrclip) unverlierbar zu fixieren.

So ist aus der DE 15 15 831 C3 eine Einrichtung zur Halterung auswechselbarer Kontaktelemente in elektrischen Steckverbindungen bekannt, bei der ein Sperrkegel das Kontaktelement in einem Isolierkörper gegen ein Herausfallen sichert.

Aus der EP-A-1 291 980 ist ein Verbinder mit Anschlusskontakten und einer Demontagevorrichtung bekannt, wobei in dem Steckverbindergehäuse mehrere erste Ausnehmungen vorgesehen sind in denen die Anschlusskontakte zumindest bereichsweise eingeschoben und verriegelt sind. Zum Entfernen der Anschlusskontakte ist eine Demontagevorrichtung vorgesehen, die in eine zusätzliche zweite Ausnehmung einzufügen ist, um eine am Anschlussteil angeformte Verriegelungsnase zu entriegeln und den Anschlusskontakt aus der ersten Ausnehmung zu entfernen.

Die US 4,378,103 A und US 4,358,179 A zeigen jeweils ein Verfahren zur Herstellung einer Verrastungsvorrichtung für einen elektrischen Kontakt in einer Durchgangsöffnung eines Isolierkörpers mithilfe zwei ineinandergreifender Formkerne.

Und aus der DE 198 58 091 A1 ist ein elektrischer Verbinder mit verblockendem integrierten Scharnier gezeigt, bei dem ein Verbinderhauptgehäuse mit einer Abdeckung mittels eines Scharnieres verbunden ist. Dabei sind zwischen dem Verbinderhauptgehäuse und der Abdeckung Vorsprünge vorgesehen, die eine Verblockung der beiden Teile bewirken, speziell für den Fall, dass das Scharnier bei häufigen Drehbewegungen brüchig wird.

Nachteilig wirkt sich dabei aus, dass zum Fixieren der elektrischen Kontakte mindestens ein zusätzliches Arretierungsmittel erforderlich ist, in Form eines Sprengringes, eines Sperrclips oder Rasthakens.

Die EP 0 645 846 A2 zeigt ein Verfahren für die Herstellung einer Verrastvorrichtung für einen elektrischen Kontakt in einer Durchgangsöffnung. Der elektrische Kontakt wird über ein angeformtes Federelement in der Durchgangsöffnung fixiert.

Eine derartige Fixierung ist nicht langfristig zuverlässig, da die Federkraft des Federarms im Laufe der Zeit nachlässt. Außerdem werden hierzu aufwendig geformte Formkerne benötigt.

### Aufgabenstellung

Der Erfindung liegt daher die Aufgabe zugrunde, ein Verfahren zu schaffen, dass eine einfache sowie kostengünstige Verrastung von elektrischen Kontakten innerhalb eines Steckergehäuses ermöglicht..

Diese Aufgabe wird zunächst mittels eines Verfahrens nach Anspruch 1 gelöst,
wobei für die Ausformung der Durchgangsöffnung im Isolierkörper, zwei sich teilweise umfassende Form-Kerne, ein erster Formkern und ein zweiter Formkern, innerhalb eines gehäusebildenden Spritzwerkzeuges angeordnet sind, die nach dem Spritzvorgang des Isolierkörpers jeweils axial gegenläufig aus der Durchgangsöffnung entfernbar sind, wobei die Formkerne derartig geformt sind, dass an den beiden Enden der Durchgangsöffnung Rastmittel ausgebildet sind, die Rastkanten aufweisen.

Die mit der Erfindung erzielten Vorteile bestehen insbesondere darin, dass ein bekannter als Stift- oder Buchsenkontakt ausgebildeter elektrischen Kontakt ohne ein zusätzliches, separates Halte- oder Verrastungselement direkt in der erfindungsgemäßen Ausführung des Isolierkörpers verrastbar ist. Dazu ist vorteilhaft gegenüber den bekannten Anordnungen vorgesehen, den Kontakt innerhalb einer ihn aufnehmenden Durchgangsöffnung beidseitig mit entsprechend ausgebildeten Rastmitteln zu fixieren.
Dazu ist auf der einen Seite der Durchgangsöffnung ein Anschlagbogen und auf der andere Seite ein Rastblock vorgesehen, zwischen denen der Kontakt einfügbar und verrastbar ist. Dabei rastet eine am elektrischen Kontakt angeordnete, umlaufende Nut mit einem Hinterschnitt an dem mit einer Rastkante versehenen Rastblock ein.
Während der Rastblock eine Rastkante mit einem Winkel von 90° aufweist, ist der angrenzende Winkel der Rastkante des elektrischen Kontaktes mit einem Winkel versehen, der zwischen 80° und 85° bezüglich der Nutebene liegt. Vorzugsweise bei 83°.

Der Vorteil gegenüber einer üblichen 90°-Abwinklung liegt darin, dass der Rastblock auf einem freiliegenden Überhang der Wandung der Durchgangsöffnung angeformt ist, und der Überhang bei einer, Belastung des Kontaktes beim Steckvorgang eventuell radial nach außen gebogen wird, so dass die Gefahr eines Herausrutschens des Kontaktes aus dem Arretierungsbereich besteht.
Bei der vorgesehenen Ausführung verhakt sich die steilere Schräge der Rastkante des Kontaktes an der Rastkante des Rastblockes.
Dieser Effekt des Aufbiegens wird bei der Demontage des elektrischen Kontaktes aus der Durchgangsöffnung durch eine extreme Auslenkung des Überhanges ausgenutzt.
Wird dazu ein Demontagewerkzeug zwischen den Crimpbereich des elektrischen Kontaktes und der an dem Rastblock angeformten Schräge eingefügt. Dann kann der Überhang so weit radial nach außen gelenkt werden, bis der Kontakt frei liegt und an dem angecrimpten Kabel herausziehbar ist.
Eine diesbezügliche, zweiseitige Verrastungsmöglichkeit war bisher so nicht möglich, da ein entsprechendes Werkzeug zur Ausformung derartiger Öffnungen und Rastmittel nicht zur Verfügung stand.

Mittels des ausgeführten Verfahrens, bei dem zwei, zumindest bereichsweise, ineinandergreifende Form-Kerne zur Formgebung der Durchgangsöffnung sowie gleichzeitig der Rastmittel, entwickelt wurde, ist eine einfache sowie kostengünstige Verrastung von elektrischen Kontakten innerhalb eines Steckergehäuses möglich.

### Ausführungsbeispiel

Ein Ausführungsbeispiel der Erfindung ist in der Zeichnung dargestellt und wird im folgenden näher erläutert. Es zeigen:
- Fig. 1: eine Befestigungstechnik aus dem Stand der Technik,
- Fig. 2: einen Längsschnitt durch einen Isolierkörper mit elektrischem Kontakt,
- Fig. 3: einen Längsschnitt durch einen Isolierkörper mit elektrischem Kontakt und elektrischem Kabel inklusive einem Demontagewerkzeug, und
- Fig. 4: einen Längsschnitt durch einen Isolierkörper mit Form-Kernen.

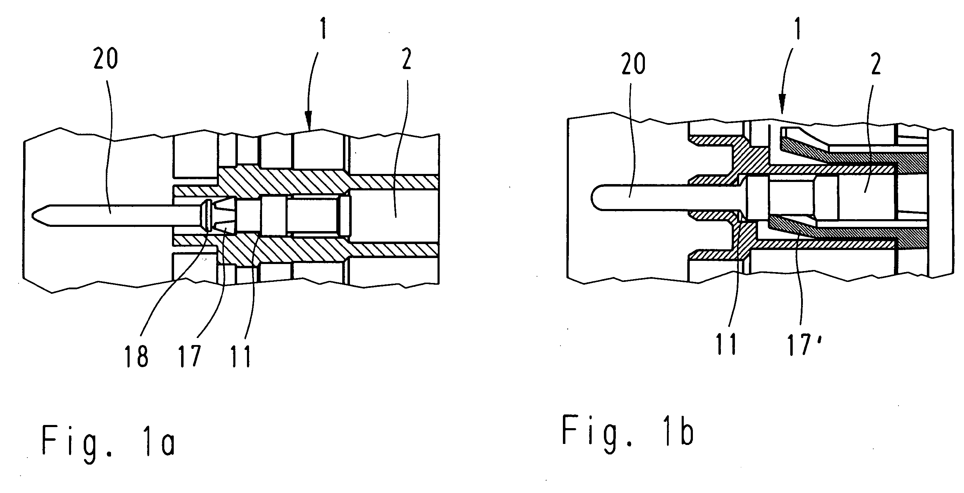

In den Fig.1a, 1b ist der augenblickliche Stand der Technik dargestellt, mit dem elektrische Kontakte in Steckergehäusen verrastet werden.
Dazu ist in der Fig. 1a ein Längsschnitt durch einen Isolierkörper 1 mit einem Kontakt 20 gezeigt, der in Steckrichtung in eine Öffnung 2 gegen eine Rastkante 11 eingeschoben ist und durch ein aus der Steckrichtung aufgesetztes Sperrelement 17, arretiert wird, dass an der Gegenseite des Anschlages 11 anliegt. Dabei ist das Sperrelement als hülsenförmige Sicherungsscheibe ausgebildet, die sich an einem Bund 18 am Kontakt abstützt und den Kontakt in der Öffnung fixiert.

Weiterhin ist in der Fig. 1b ein elektrischer Kontakt 20 gezeigt, der ebenfalls in Steckrichtung in eine Öffnung 2 gegen eine Rastkante 11 eingeschoben ist. Zur Arretierung des Kontaktes 20 ist ein als Rastarm ausgebildetes Sperrelement 17 vorgesehen, das von der Anschlussseite ebenfalls in Steckrichtung gegen einen Bund des Kontaktes wirkt und dieses in der Öffnung 2 fixiert.

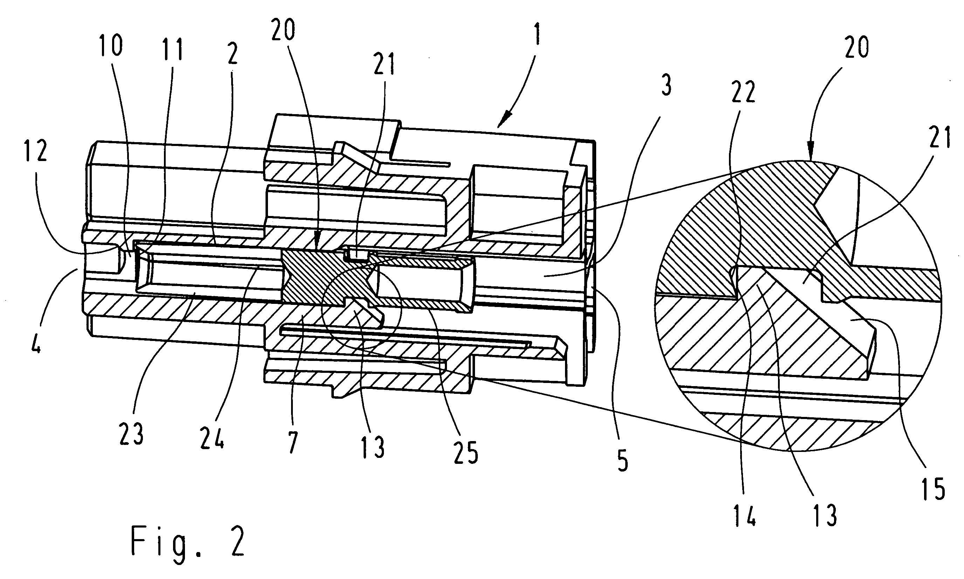

In der Fig. 2 ist ein Längsschnitt durch einen Isolierkörper 1 mit einem in einer Durchgangsöffnung 2 eingefügten elektrischen Kontakt 20 gezeigt, der hier als Buchse ausgebildet, eine mit mehreren Längsschlitzen 24 versehene Kontaktzone 23 aufweist, sowie einen davon durch eine umlaufende Nut 21 getrennten Crimpbereich 25.
Der elektrische Kontakt 20 ist beidseitig mit an den Enden der Durchgangsöffnung 2 angeformten, hakenförmig ausgebildeten Rastmitteln fixiert.
Die Rastmittel sind als U-förmiger Anschlagbogen 10 auf der Steckseite 4 der kreisförmigen Durchgangsöffnung 2 ausgebildet, sowie als Rastblock 13 auf der entgegengesetzten Abschlussseite 5.
Dabei ist vorgesehen, die beiden Rastmittel 10, 13, die nur bereichsweise in die Durchgangsöffnung hineinragen, vorzugsweise um etwa 180° radial versetzt anzuordnen.

Damit ist der Kontakt 20 sicher fixiert, auch wenn der Anschlagbogen 10 nicht komplett kreisförmig innerhalb der Durchgangsöffnung 2 ausgebildet ist und der Rastblock 13 etwa die Breite einer halben Durchgangsöffnung aufweist.
Der Anschlagbogen ist so geformt, dass er von einer hier oberen, maximalen in den Innenraum weisenden Anformung, beidseitig symmetrisch, zum unteren Teil der Durchgangsöffnung verläuft und dort übergangslos in der Wandung endet.

Wird der Kontakt in Steckrichtung 4, hier von rechts nach links, in die Durchgangsöffnung 2 eingesetzt, so liegt das steckseitige Ende an der linken "oberen" Rastkante 11 des vorderen Anschlagbogens 10 an, während der rechte "untere" hakenförmige Rastblock 13 in die umlaufende Nut 21 des elektrischen Kontaktes 20 eintaucht. Darüber hinaus weist der Rastblock eine Schräge 15 auf, deren Bedeutung weiter unten erläutert wird.
Die umlaufende Nut 21 des Kontaktes weist eine Besonderheit auf, in dem mindestens die auf den Rastblock wirkende Rastkante des Hinterschnittes 22 einen Winkel zwischen 80° und 85° bezüglich der Grundfläche der Nut aufweist, vorzugsweise 83,5°.
Dies hat den Vorteil, dass bei einer axialen Belastung des elektrischen Kontaktes 20, z.B. bei einem Steckvorgang mit einem Gegenstecker, die Belastung gleichzeitig auf den Rastblock 13 weitergegeben wird. Da der Rastblock auf dem Überhang 7 angeordnet ist, besteht die Gefahr, dass der Rastblock ausgelenkt wird und ein Herausrutschen des Kontaktes aus der Durchgangsöffnung erfolgt.
Durch den steileren Winkel verkeilt sich der Hinterschnitt 22 am Fußpunkt der Rastkante 14 und verhindert weitgehend eine Auslenkung des Überhanges 7.

Ein an den Rastblock 13 angrenzender Einfügeraum 3, der u.a. die Crimpzone des elektrischen Kontaktes mit einem entsprechenden elektrischen Kabel aufnimmt, weist eine vergrößerte Dimension gegenüber der Durchgangsöffnung 2 auf: zum Einen, um neben einem elektrischen Leiter 27 ein Demontagewerkzeug 40 aufzunehmen, und zum anderen, um einen Teil der Wandung der Durchgangsöffnung 2, als freiliegenden Überhang 7 auszubilden.

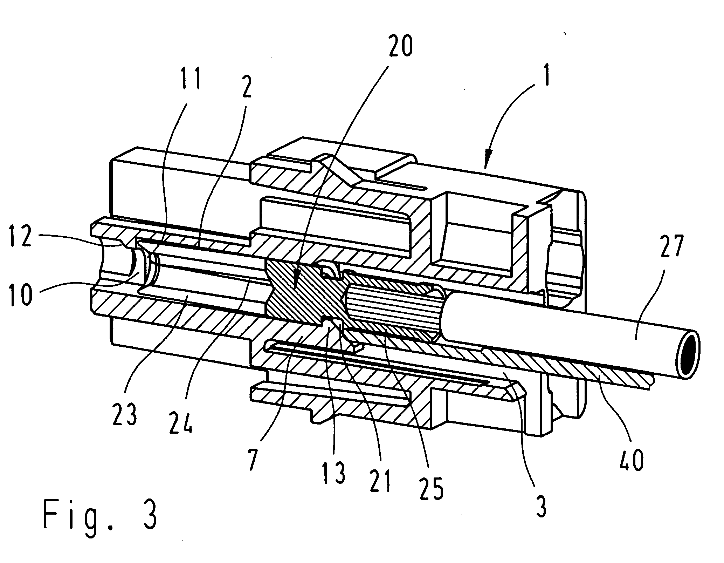

Wird, wie in der Fig. 3 gezeigt, das Demontagewerkzeug 40 zwischen die Schräge 15 des Rastblockes 13 und die Crimpzone 25 des Kontaktes 20 eingefügt, so wird der Rastblock, aufgrund des freiliegenden Überhanges 7 nach unten gedrückt. Dabei wird die Spitze des hakenförmigen Rastblockes 13 aus der umlaufenden Nut 21 des elektrischen Kontaktes 20 Herausgehebelt, und der Kontakt 20 kann an dem bereits angecrimpten Kabel 27 aus der Durchgangsöffnung 2 herausgezogen werden.

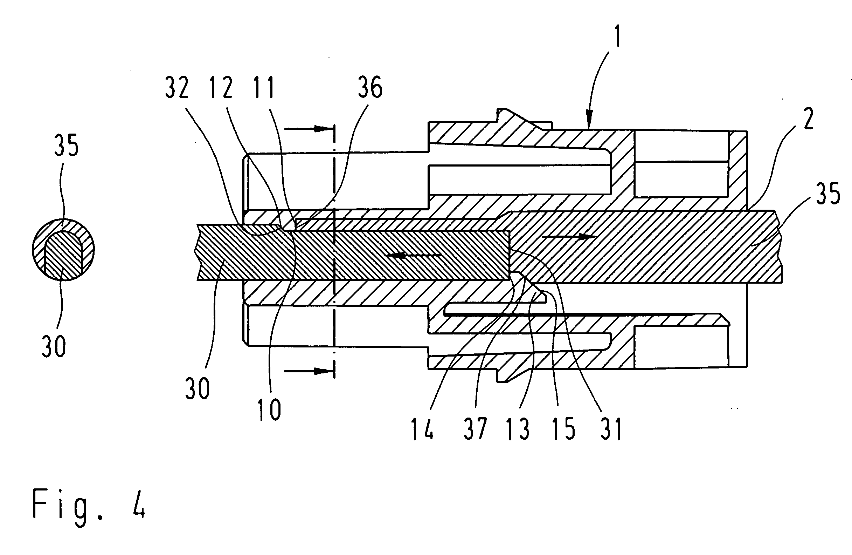

In der Fig. 4 ist schematisch, vereinfacht dargestellt, wie die Ausformung der beiden Rastmittel 10, 13 zum Verrasten des elektrischen Kontaktes 20 in der Durchgangsöffnung 2 des Isolierkörpers erzeugt wird.
Dabei ist der Isolierkörper 1 in einem Längsschnitt mit der Durchgangsöffnung 2 und mit den angedeuteten Form-Kernen 30, 35 zum Zeitpunkt der erkalteten Umspritzung der Kunststoffmasse gezeigt.
Die beiden Form-Kerne 30, 35 sind unterschiedlich geformt, wobei ein nahezu ovaler Innenkern 30 von einem U-förmigen Außenkern 35 zumindest bereichsweise umfasst wird, so dass die beiden gegenläufig zusammengeschobenen Form-Kerne die etwa kreisförmige Durchgangsöffnung 2 ausbilden.
Dabei formen die Frontseiten 31, 36 der Form-Kerne 30, 35 die beiden Rastkanten der Rastmittel aus, und zwar die Frontseite 31 die "hintere" Rastkante 14 am Rastblock 13 und die Frontseite 36 die vordere Rastkante 11 am Anschlagbogen 10.
Weitere Anformungen 32 und 37 an den Form-Kernen bewirken beim Spritzvorgang die Schrägen 12 am Anschlagbogen 10 und die Schräge 15 am Rastblock 13.
Aufgrund der den ovalen ersten Kern 30 umfassenden Ausbildung des zweiten Kernes 35, kann der Anschlagbogen 10 von seiner maximalen Beabstandung übergangslos in den seitlichen Bereich der Innenwand übergehen.

Die beiden Kerne werden nach dem Spritzvorgang um 180° gegenläufig aus der Durchgangsöffnung entfernt.

## Patentansprüche

1. Verfahren zur Herstellung einer Verrastungsvorrichtung für einen elektrischen Kontakt (20) in einer Durchgangsöffnung (2) und einem sich daran anschließenden Einfügeraum (3) in einem Isolierkörper (1) mit einer Steckseite (4) und einer Anschlussseite (5), mittels eines Spritzwerkzeuges zur Ausbildung für einen Steckverbinder, wobei für die Ausformung der Durchgangsöffnung (2) im Isolierkörper (1), zwei sich teilweise umfassende Formkerne, ein erster Formkern (30) und ein zweiter Formkern (35), innerhalb des gehäusebildenden Spritzwerkzeuges angeordnet sind, die nach dem Spritzvorgang des Isolierkörpers jeweils axial gegenläufig aus der Durchgangsöffnung (2) entfernt werden und der erste Formkern (30) eine Rastkante (14) an einem Ende des Rastblocks (13) ausbildet,
**dadurch gekennzeichnet, dass**
- der erste Formkern eine ovale Form aufweist, und der zweite Formkern als U-förmige Hülse auf den ersten Formkern aufschiebbar ist und den ersten Formkern dreiseitig umfasst, und
- der zweite Formkern eine Rastkante am anderen Ende des Rastblocks ausbildet.

## Claims

1. Method for producing a locking device for an electrical contact (20) in a through-opening (2) and an adjoining insertion space (3) in an insulator (1) with an insertion side (4) and a connection side (5), by means of an injection mould for forming a plug-in convector,
wherein, for the moulding of the through-opening (2) in the insulator (1), two partially enclosing mould cores, a first mould core (30) and a second mould core (35), are arranged within the injection mould forming a housing, the said mould cores are respectively removed in opposite axial directions from the through-opening (2) after the operation.of moulding the insulator, and the first mould core (30) forms a locking edge (14) at one end of the locking block (13),
**characterized in that**
- the first mould core has an oval form, and the second mould core as a U-shaped sleeve can be pushed onto the first mould core and encloses the first mould core on three sides, and
- the second mould core forms a locking edge at the other end of the locking block.

## Revendications

1. Procédé de fabrication d'un dispositif d'enclenchement pour un contact électrique (20) dans une ouverture traversante (2) et un espace d'insertion s'y raccordant (3) dans un corps isolant (1) comprenant un côté d'enfichage (4) et un côté de raccordement (5) au moyen d'un outil d'injection pour réaliser un connecteur enfichable,
dans lequel, pour former l'ouverture traversante (2) dans le corps isolant (1), deux noyaux de moule s'entourant en partie, un premier noyau de moule (30) et un deuxième noyau de moule (35), sont disposés à l'intérieur de l'outil d'injection formant le boîtier, lesquels, après l'opération d'injection du corps isolant, sont à chaque fois enlevés axialement èn sens opposé hors de l'ouverture traversante (2) et le premier noyau de moule (30) constitue une arête d'enclenchement (14) à une extrémité du bloc d'enclenchement (13), **caractérise en ce que**
- le premier noyau de moule présente une forme ovale et le deuxième noyau de moule peut être enfiché sous forme de douille en forme de U sur le premier noyau de moule et entoure le premier noyau de moule sur trois côtés, et
- le deuxième noyau de moule constitue une arête d'enclenchement à l'autre extrémité du bloc d'enclenchement.
